# FASCICULE DE BREVET EUROPEEN

(11) **EP 2 303 622 B1**
(45) Date de publication et mention de la délivrance du brevet: **01.05.2013**
(21) Numéro de dépôt: 09772698.8
(22) Date de dépôt: 04.06.2009
(51) Int. Cl.: B60J 10/02, B60J 10/06

(54) **JOINT D'ETANCHEITE POUR VITRE D'AUTOMOBILE.**
DICHTUNG FÜR KRAFTFAHRZEUGFENSTER
SEAL FOR AUTOMOBILE WINDOW

(30) Priorité: 05.06.2008 FR 0853718
(43) Date de publication de la demande: 06.04.2011
(73) Titulaire: Cooper Standard France, 35000 Rennes (FR)
(72) Inventeur: VEILLE, Jean-Marc, F-35000 Rennes (FR); GUIZOUARN, Vincent, F-35410 Domloup (FR); STEFANELLI, Didier, F-35210 Saint Christophe Des Bois (FR)
(74) Mandataire: Intès, Didier Gérard André
(86) Numéro de dépôt international: PCT/FR2009/051059
(87) Numéro de publication internationale: WO 2010/001016

(56) Documents cités:
- EP-A- 0 368 817
- EP-A- 0 845 347
- WO-A-99/34966
- DE-A1- 19 504 828
- DE-U1- 20 006 771
- US-A- 5 331 767

## Description

L'invention se rapporte à un joint d'étanchéité monté sur vitre et concerne plus particulièrement le domaine de l'automobile. DE-U-200 06 771 divulgue une combinaison d'un joint d'étanchéité et d'un élément fixe coopérant avec une première vitre d'automobile selon le préambule de la revendication 1.

Dans une automobile, la mise en place d'un joint d'étanchéité, par exemple un joint pour vitre mobile nécessite parfois de concevoir un support ayant un profil compliqué. A titre d'exemple, dans le cas de deux vitres adjacentes (une vitre de custode jouxtant une vitre mobile), il est souhaitable, pour alléger la structure et améliorer l'esthétique, de supprimer tout support fixe entre les deux vitres. De façon générale, l'invention permet d'adapter le joint de vitre à un support de profil extrêmement simple.

Plus précisément, l'invention concerne une combinaison d'un joint d'étanchéité et d'un élément fixe coopérant avec une première vitre d'automobile selon la revendication 1.

L'élément fixe peut être un montant ou une traverse supérieure de portière ou un autre élément de la carrosserie. Il peut aussi être constitué par une seconde vitre, fixe par rapport à la première.

Cette technique de moulage d'encapsulation sur l'élément fixe, voire le verre même permet d'obtenir un aspect particulièrement esthétique, notamment vu de l'extérieur, car la partie obtenue par moulage d'encapsulation vient en affleurement de l'élément fixe, du côté extérieur.

Dans le cas d'une seconde vitre, selon une caractéristique avantageuse de l'invention, le moulage d'encapsulation forme une bande dudit matériau s'étendant le long du bord de ladite seconde vitre et affleurant avec une face extérieure de celle-ci.

Du côté intérieur, ladite bande provenant du moulage d'encapsulation peut s'étendre sur une zone marginale de la face intérieure de ladite seconde vitre. Le moulage d'encapsulation adhère à ladite seconde vitre sur cette zone marginale et sur le champ de ladite vitre.

L'invention permet d'obtenir un résultat particulièrement satisfaisant, tant sur le plan de la légèreté structurelle que sur le plan de l'esthétique, lorsque ladite seconde vitre est une vitre de custode.

Selon un mode de réalisation possible, la nervure précitée fait partie d'un profilé extrudé.

Ce profilé peut porter au moins une lèvre souple en matériau élastomère ou analogue, coopérant avec ladite première vitre. La ou chaque lèvre souple peut être co-extrudée avec une partie plus rigide incluant ladite nervure.

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :
- la figure 1 est une vue générale en plan d'une vitre de custode équipée d'un joint d'étanchéité conforme à l'invention ;
- la figure 2 est une coupe II-II de la figure 1, à plus grande échelle ;
- la figure 3 est une vue analogue à la figure 2 en présence d'une vitre mobile coopérant avec le joint d'étanchéité ; et
- la figure 4 est une vue schématique illustrant le moulage par encapsulation permettant de terminer et fixer le joint au bord de la vitre de custode.

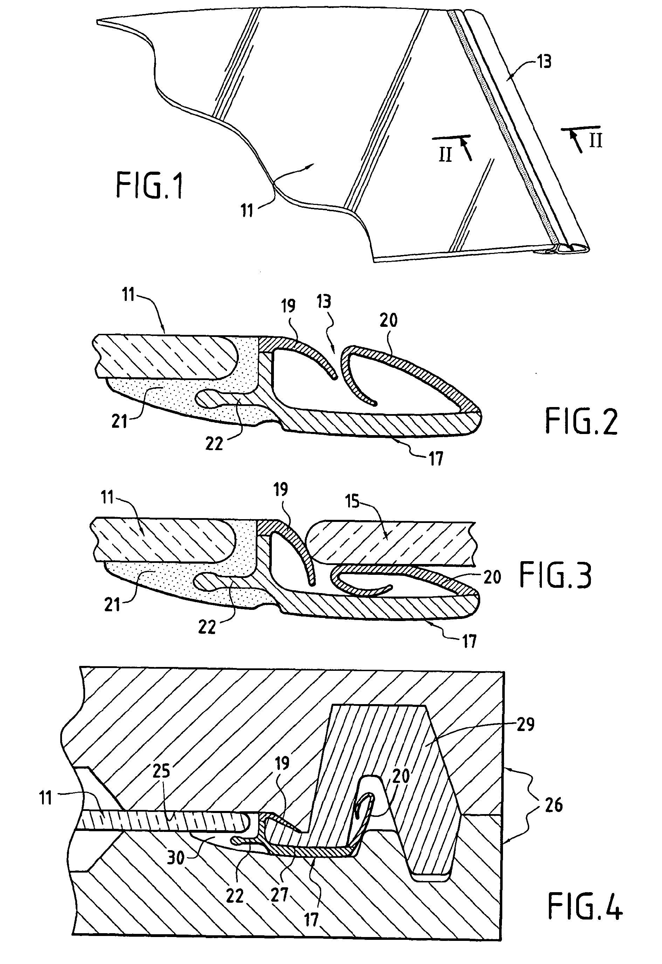

En considérant plus particulièrement les figures 1 à 3, on a représenté, en tant qu'élément fixe, une vitre de custode 11 dont l'un des bords, sensiblement rectiligne est équipé d'un joint d'étanchéité 13 appelé à coopérer avec le bord d'une vitre mobile. Dans la suite de la description, la vitre mobile 15 (figure 3) est appelée première vitre tandis que la vitre de custode 11 est appelée seconde vitre.

Le joint d'étanchéité 13 comporte un profilé extrudé 17 en matière plastique relativement rigide (bien que comportant des lèvres souples 19, 20 en matériau élastomère ou analogue appelées à coopérer avec ladite première vitre) et une bande de matériau 21 thermoplastique ou thermodurcissable résultant d'un processus d'encapsulation réalisé pendant l'étape de fixation du profilé extrudé 17 le long du bord de ladite seconde vitre 11.

Pour ce faire, le joint et plus particulièrement le profilé extrudé 17 comporte au moins une nervure longitudinale 22 et le moulage d'encapsulation qui est réalisé sur le bord de ladite seconde vitre est effectué de façon à englober ladite nervure. Dans l'exemple représenté, cette nervure 22 a la forme d'une aile plate présentant une surépaisseur à son extrémité libre. Elle s'étend sensiblement perpendiculairement à la partie du profilé extrudé à laquelle elle se raccorde. L'encapsulation est réalisée non seulement pour englober complètement cette nervure mais aussi pour faire adhérer le matériau 21 le long d'une zone marginale de la face intérieure de ladite seconde vitre 11 ainsi que sur le champ de celle-ci.

Avantageusement, le moulage d'encapsulation qui s'étend le long du bord de ladite seconde vitre est réalisé de façon à affleurer avec la face extérieure de celle-ci. La partie résultant du moulage d'encapsulation est fixée à ladite seconde vitre après dépôt sur celle-ci d'un revêtement d'adhérisation dit "primaire" connu en soi.

Comme mentionné précédemment, le profilé extrudé 17 comporte deux lèvres souples 19, 20 en matériau élastomère. Ces deux lèvres souples qui coopèrent avec ladite première vitre 15 pour réaliser l'étanchéité est avantageusement co-extrudée avec la partie plus rigide qui inclut ladite nervure. La comparaison des figures 2 et 3 montre le fléchissement de ces deux lèvres 19, 20 lorsque ladite première vitre, mobile, est mise en place.

La figure 4 illustre le moulage d'encapsulation constituant la dernière étape de la fabrication du joint d'étanchéité en même temps que sa fixation le long de ladite seconde vitre 11. Cette dernière est placée dans une cavité 25 du moule 26 prévu à cet effet et le profilé extrudé est placé dans une cavité adjacente 27. L'une des lèvres (lèvre 20) est redressée pour permettre la mise en place dans le moule 26 d'un noyau 29 venant immobiliser le profilé extrudé dans le moule. Lorsque ladite seconde vitre 11 et le profilé extrudé 17 sont mis en place dans le moule, une cavité 30 ayant la section représentée est définie. La nervure 22 fait saillie à l'intérieur de cette cavité. Un matériau thermoplastique ou thermodurcissable est injectée dans la cavité 30, ce qui a pour effet de fixer définitivement le profilé extrudé le long du bord de ladite seconde vitre, le matériau résultant du moulage d'encapsulation venant en affleurement avec la vitre 11, du côté extérieur.

Bien entendu, l'invention vise aussi toute vitre, notamment vitre de véhicule automobile, munie, sur l'un de ses bords, d'un joint d'étanchéité comme décrit ci-dessus.

En outre, comme mentionné ci-dessus, la vitre de custode n'est qu'un exemple. L'invention peut être transposée à tout élément fixe par rapport à ladite première vitre, auquel on vient fixer le joint, par moulage et encapsulation.

## Revendications

1. Combinaison d'un joint d'étanchéité et d'un élément fixe (11) coopérant avec une première vitre (15) d'automobile, le joint d'étanchéité comportant au moins une nervure longitudinale (22) et étant fixé sur un bord de l' élément (11) fixe par rapport à ladite première vitre, par moulage d'encapsulation adhérant sur une zone marginale et sur le champ dudit élément fixe, le matériau dudit moulage d'encapsulation englobant ladite nervure, **caractérisée en ce que**, ledit moulage d'encapsulation est réalisé de façon à affleurer avec la face extérieure dudit élément fixe.

2. Combinaison selon la revendication 1, **caractérisée en ce que** ledit élément (11) est une seconde vitre.

3. Combinaison selon la revendication 1, **caractérisée en ce que** ledit moulage d'encapsulation forme une bande (21) dudit matériau s'étendant le long du bord dudit élément(11) en affleurant avec une face extérieure de celui-ci.

4. Combinaison selon l'une des revendications précédentes, **caractérisée en ce que** ladite nervure (22) fait partie d'un profilé extrudé (17).

5. Combinaison selon la revendication 4, **caractérisée en ce que** ledit profilé extrudé (17) porte au moins une lèvre souple (19, 20) en matériau élastomère ou analogue, coopérant avec ladite première vitre (15).

6. Combinaison selon la revendication 5, **caractérisée en ce que** la ou chaque lèvre souple (19, 20) est co-extrudée avec une partie plus rigide incluant ladite nervure (22).

7. Combinaison selon la revendication 5 ou 6, **caractérisée en ce que** ladite première vitre (15) est une vitre mobile.

8. Combinaison selon l'une des revendications 2 à 7, **caractérisée en ce que** ladite seconde vitre (11) est une vitre de custode.

9. Combinaison selon la revendication 8, **caractérisée en ce que** le matériau dudit moulage d'encapsulation s'étend sur une bande marginale d'une face intérieure de ladite seconde vitre.

10. Combinaison selon la revendication 9, **caractérisée en ce que** le matériau dudit moulage d'encapsulation est fixé à ladite seconde vitre avec interposition d'un revêtement d'adhérisation.

## Claims

1. A combination of a weather seal and a stationary element (11) co-operating with a first car window (15), the weather seal including at least one longitudinal rib (22) and being fastened by encapsulation molding to one edge of the element (11) that is stationary compared to said first window, the encapsulation molding adhering both to a marginal zone and to the edge of said stationary element, the material of said encapsulation molding covering said rib, the combination being **characterized in that** said encapsulation molding is made in such a manner as to be flush with the outside face of said stationary element.

2. A combination according to claim 1, **characterized in that** said element (11) is a second window.

3. A combination according to claim 1, **characterized in that** said encapsulation molding forms a strip (21) of said material extending along the edge of said element (11) flush with an outside face thereof.

4. A combination according to any preceding claim, **characterized in that** said rib (22) forms a portion of an extruded section member (17).

5. A combination according to claim 4, **characterized in that** said extruded section member (17) carries at least one flexible lip (19, 20) of elastomer or analogous material, co-operating with said first window (15).

6. A combination according to claim 5, **characterized in that** the or each flexible lip (19, 20) is co-extruded with a more rigid portion including said rib (22).

7. A combination according to claim 5 or claim 6, **characterized in that** said first window (15) is a movable window.

8. A combination according to any one of claims 2 to 7, **characterized in that** said second window (11) is a quarter-light window.

9. A combination according to claim 8, **characterized in that** the material of said encapsulation molding extends over a marginal strip of an inside face of said second window.

10. A combination according to claim 9, **characterized in that** the material of said encapsulation molding is fastened to said second window with an interposed bonding coating.

## Patentansprüche

1. Kombination aus einer Dichtung und einem festen Element (11), die mit einer ersten Scheibe (15) eines Kraftfahrzeugs zusammenwirken, wobei die Dichtung wenigstens eine Längsrippe (22) umfaßt und an einem Rand des im Vergleich zur ersten Scheibe festen Elements (11) mittels Verkapselungsguß, der an einem Randbereich und an dem Feld des festen Elements haftet, befestigt ist, wobei das Material des Verkapselungsgusses die Rippe umschließt, **dadurch gekennzeichnet, daß** der Verkapselungsguß derart ausgebildet ist, daß er mit der Außenseite des festen Elements bündig abschließt.

2. Kombination nach Anspruch 1, **dadurch gekennzeichnet, daß** das Element (11) eine zweite Scheibe ist.

3. Kombination nach Anspruch 1, **dadurch gekennzeichnet, daß** der Verkapselungsguß ein Band (21) aus dem Material bildet, das sich entlang dem Rand des Elements (11) unter bündigem Abschließen mit einer Außenseite dessen erstreckt.

4. Kombination nach einem der vorhergehenden Ansprüche, **dadurch gekennzeichnet, daß** die Rippe (22) Teil eines stranggepreßten Profils (17) ist.

5. Kombination nach Anspruch 4, **dadurch gekennzeichnet, daß** das stranggepreßte Profil (17) wenigstens eine flexible Lippe (19, 20) aus Elastomermaterial oder ähnlichem trägt, die mit der ersten Scheibe (15) zusammenwirkt.

6. Kombination nach Anspruch 5, **dadurch gekennzeichnet, daß** die oder jede flexible Lippe (19, 20) mit einem die Rippe (22) einschließenden starreren Teil coextrudiert ist.

7. Kombination nach Anspruch 5 oder 6, **dadurch gekennzeichnet, daß** die erste Scheibe (15) eine bewegliche Scheibe ist.

8. Kombination nach einem der Ansprüche 2 bis 7, **dadurch gekennzeichnet, daß** die zweite Scheibe (11) ein feststehendes Heckseitenfenster ist.

9. Kombination nach Anspruch 8, **dadurch gekennzeichnet, daß** das Material des Verkapselungsgusses sich über einen Randstreifen einer Innenseite der zweiten Scheibe erstreckt.

10. Kombination nach Anspruch 9, **dadurch gekennzeichnet, daß** das Material des Verkapselungsgusses an der zweiten Scheibe unter Einfügen einer Haftbeschichtung befestigt ist.
